## Europäisches Patentamt

## European Patent Office

## Office européen des brevets

(11) Veröffentlichungsnummer: **0 162 220**

**A1**

(12) **EUROPÄISCHE PATENTANMELDUNG**

(21) Anmeldenummer: **85103079.1**

(22) Anmeldetag: **16.03.85**

(51) Int. Cl.⁴: **B 25 J 19/06**

(30) Priorität: **13.04.84 DE 3414067**

(43) Veröffentlichungstag der Anmeldung:
**27.11.85 Patentblatt 85/48**

(84) Benannte Vertragsstaaten:
**AT BE CH DE FR GB IT LI NL SE**

(71) Anmelder: **GdA Gesellschaft für digitale Automation mbH**
**Lützelsteiner Strasse 1**
**D-8000 München 45(DE)**

(72) Erfinder: **Beyer, Hasso**
**Kreuzeckstrasse 9**
**D-8900 Augsburg(DE)**

(74) Vertreter: **Goddar, Heinz J., Dr. et al,**
**FORRESTER & BOEHMERT Widenmayerstrasse 4/I**
**D-8000 München 22(DE)**

(54) **Überlastsicherung.**

(57) Überlastsicherung, insbesondere für einen einen Roboterarm und ein Roboterwerkzeug aufweisenden Industrieroboter, vorzugsweise anordbar zwischen dem Roboterarm und dem Roboterwerkzeug, mit einem Roboterflansch (1) und einem Werkzeugflansch (2), wobei der Werkzeugflansch relativ zu dem Roboterflansch bewegbar ist, wobei weiterhin der Roboterflansch und der Werkzeugflansch in einem mit einem Druckmedium beaufschlagbaren Dichtungsbereich (3) abdichtend zusammenwirken und ferner eine Sicherheitsabschaltung durch einen Druckabfall in dem Druckmedium auslösbar ist.

FIG.1

EP 0 162 220 A1

GdA, Gesellschaft für digitale Automation mbH,
Lützelsteiner Straße 1, 8000 München 45
-------------------------------------------------

Überlastsicherung
-------------------------------------------------

Die Erfindung betrifft eine Überlastsicherung, insbesondere für einen einen Roboterarm und ein Roboterwerkzeug aufweisenden Industrieroboter, vorzugsweise anordbar zwischen dem Roboterarm und dem Roboterwerkzeug,
mit einem Roboterflansch und einem Werkzeugflansch,
wobei der Werkzeugflansch relativ zu dem Roboterflansch
bewegbar ist.

Mit Handhabungsmaschinen, insbesondere Industrierobotern,
werden oftmals relativ sperrige, relativ große oder relativ schwere Gegenstände bewegt und noch dazu mit einer
beträchtlichen Geschwindigkeit. Hierbei ist immer die Gefahr gegeben, daß insbesondere bei ausladenden Werkstücken aufgrund von Bewegungen, die erheblich über die Grundabmessungen des Industrieroboters hinausgehen, Berührungen oder Kollisionen mit anderen Werkstücken, Maschinen oder sonstigen in der Bewegungsbahn befindlichen Gegenständen auftreten. Man ist daher dazu übergegangen, zwischen dem Werkzeug und dem Roboterarm eine Überlastsicherung der eingangs genannten Art einzubauen, die also gleichsam eine "Sollbruchstelle" darstellt.

Bei einem Industrieroboter nimmt das maximale Gewicht einer Last, die mit dem Industrieroboter noch bewegt werden kann bei gegebener Antriebsleistung mit zunehmenden Hebelarm, d.h. mit zunehmender Auslegerweite des Roboterarms ab. Auch vermindert das Gewicht des Roboterarms selbst die "Nutzlast" des Industrieroboters. Für eine Überlastsicherung der in Rede stehenden Art ergeben sich aus diesen Gesichtspunkten Rahmenanforderungen nach einer möglichst geringen axialen Erstreckung bzw. Bautiefe und einem möglichst geringen Gewicht.

Bei einer aus der Praxis bekannten Überlastsicherung ist in den Roboterflansch ein elektrischer Näherungsschalter eingesetzt, der in einem bestimmten Abstand zu dem Werkzeugflansch angeordnet ist. Bei einer Änderung des Abstandes zwischen dem Werkzeugflansch und dem Roboterflansch spricht der elektrische Näherungsschalter an und
löst eine Sicherheitsabschaltung aus. Diese bekannte Ausgestaltung einer Überlastsicherung ist zunächst schon
nicht befriedigend hinsichtlich der weiter oben erläuterten
Anforderungen betreffend eine möglichst geringe Bautiefe
und ein möglichst geringes Gewicht. Der elektrische Näherungsschalter weist eine nicht unbeträchtliche Längenerstreckung
auf und trägt auch wesentlich zum Gesamtgewicht der Überlastsicherung bei. Darüber hinaus ist der Werkzeugflansch
bei der bekannten Überlastsicherung in seiner Bewegungsfreiheit sehr begrenzt, da er um den relatv langgestreckten
elektrischen Näherungsschalter herumbauend ausgebildet ist.
Ohne eine derartig umfassende Ausbildung würde die Bautiefe
dieser bekannten Überlastsicherung sich aber nochmals beträchtlich vergrößern. Die den Näherungsschalter umfassende
Ausbildung des Werkzeugflansches ergibt bei bestimmten
etwa mit einer Kippbewegung des Werkzeugflansches verbundenen
Beanspruchungen des Industrieroboters sehr leicht eine Beschädigung der Überlastsicherung. Damit aber ergibt sich
eine beschränkte Anwendungsfähigkeit dieser Überlastsicherung.

Die Näherungsschalter als elektrische Schaltelemente können
auch durch elektrischen Defekt ausfallen, wobei dann in der
Regel ein Austausch eines Näherungsschalters notwendig ist.
Wenn nicht der Näherungsschalter selbst defekt ist, kann
jedoch, gerade bei einem fortwährend in Bewegung befindlichen Industrieroboter, ein Schaden an den elektrischen
Zuleitungen auftreten.

Bei diesem Stand der Technik liegt der Erfindung
daher die Aufgabe zugrunde, eine Überlastsicherung
anzugeben, die bei möglichst geringer Bautiefe und möglichst geringem Gewicht umfassender verwendbar und gleichzeitig zuverlässiger ist.

Diese Aufgabe ist zunäct und im wesentlichen dadurch gelöst, daß der Roboterflansch und der Werkzeugflansch in einem mit einem Druckmedium beaufschlagten Dichtungsbereich abdichtend zusammenwirken und daß eine Sicherheitsabschaltung durch einen Druckabfall in dem Druckmedium auslösbar ist.

Die erfindungsgemäße Ausgestaltung ergibt also eine Überlastsicherung, bei der auf einen elektrischen Näherungsschalter vollkommen verzichtet ist. Erfindungsgemäß wird die Kontrolle des Abstandes von Werkzeugflansch und Roboterflansch durch einen einfachen Dichtungsbereich eben zwischen diese beiden Flanschen bewirkt, die nur einen geringen konstruktiven Aufwand erfordert, insbesondere nur eine ganz geringe Bautiefe, wobei gleichzeitig die für diesen Dichtungsbereich notwendigen konstruktiven Maßnahmen das Gewicht der Überlastsicherung spürbar herabsetzen. Im wesentlichen bestehen diese nämlich nur in Aussparungen, in denen dann zum einen das Druckmedium geführt ist und zum anderen Dichtlippen gehaltert sind. Überdies ist als besonderer Vorteil noch anzumerken, daß die erfindungsgemäße Überlastsicherung auch wesentlich wartungsfreundlicher ist. Bei der bekannten, weiter oben beschriebenen Überlastsicherung kann es z. B. zu einem Ausfall des elektrischen Näherungsschalters kommen. Da dieser in dem Roboterflansch befestigt ist, muß eine Demontage der gesamten Überlastsicherung zunächst vorgenommen werden, um diesen Näherungsschalter austauschen zu können.

Der vorstehend bei der Formulierung der erfindungsgemäßen
Lehre verwendete Ausdruck "Druckmedium" ist im Rahmen
der Erfindung in einem sehr umfassenden Sinne zu verstehen.
Nicht notwendig muß dies ein nur als solches verwendetes
Druckmedium wie etwa Öl, Gas, Wasser usw. sein, sondern
der erfindungsgemäße Erfolg wird auch etwa mit einer (flexiblen)
Leitung erreicht, in der das Druckmedium geführt ist.

Wenn, wie in einer bevorzugten Ausführungsform vorgesehen, als Druckmedium Druckluft verwendet wird, ergibt
sich ein besonderer Vorteil bei der erfindungsgemäßen
Überlastsicherung noch durch eine beim Auslösen der
Überlastsicherung auftretende Ausblaswirkung. Die
unter Druck stehende Luft entweicht beim Auslösen der
Überlastsicherung dann im wesentlichen radial und
bläst etwa in Nähe des Dichtungsbereiches vorhandene
Staubteile od. dgl. weg. So kann sich in dem - dann geöffnetem - Dichtungsbereich kein Staub od. dgl. absetzen, der die Dichtungswirkung herabsetzen würde.

Eine weitere Unzulänglichkeit bei der bekannten Überlastsicherung ist eine mangelnde Anpaßbarkeit der Auslöselast. Der Werkzeugflansch ist an dem Roboterflansch über
eine Druckfeder gehaltert, die sich einerseits auf einem
Bolzenauflagerflansch eines Halterungsbolzens und andererseits auf einem Auflagerflansch des Roboterflansches
abstützt und eine Relativbewegung zwischen dem Werkzeugflansch und dem Roboterflansch nur ab einer bestimmten
Belastung zuläßt. Ändert sich die zulässige Belastung,
sei es daß durch den Industrieroboter bzw. die
Handhabungsmaschine Gegenstände anderen Gewichts oder
veränderter Abmessungen zu bewegen sind, so kann eine Anpassung der Überlastsicherung nur durch einen Austausch
der Druckfeder erreicht werden. Damit ist jedoch bei der
bekannten Überlastsicherung ein relativ großer Aufwand
verbunden, der eine erhebliche Stillstandzeit verursacht.

0162220

Gemäß einer weiteren Lehre der Erfindung, der auch eigenständige Bedeutung zukommt, ist diese Unzulänglichkeit dadurch überwunden, daß der Halterungsbolzen in dem Werkzeugflansch axial verschiebbar und nach Maßgabe einer zu wählenden Vorspannkraft einstellbar gehaltert ist. Im einzelnen läßt sich diese Halterung in verschiedener Weise ausführen, wobei es dem Fachmann bspw. geläufig ist, das dem Werkzeugflansch zugeordnete Ende des Halterungsbolzens mit einem Gewinde zu versehen und die axiale Lage des Halterungsbolzens über zwei gegeneinander verspannbare Muttern einzustellen. Eine bevorzugte Ausgestaltung dieser axial verschiebbaren Halterung ist weiter unten noch im einzelnen erläutert.

Die erfindungsgmäße Lehre, den Werkzeugflansch und den Roboterflansch in einem Dichtungsbereich abdichtend zusammenwirkend auszubilden, erlaubt auch Kippbewegungen des Werkzeugflansches relativ zu dem Roboterflansch. Als Anpassung an diese Bewegungsmöglichkeiten ist in weiterer Ausgestaltung der Erfindung vorgesehen, daß der Bolzenauflagerflansch in seinem Auflagerbereich kugelkalottenartig ausgebildet ist und mit einem entsprechend ausgebildeten Auflagerring zusammenwirkt, auf dem die Druckfeder aufliegt. Eine Auslenkung des Haltungsbolzens aus seiner axialen Lage ergibt dann ein kugelgelenkartiges Verschieben des Auflagerringes auf dem Auflagerbereich. Die in Normalstellung zusammenfallenden Achsen des Halterungsbolzens und der Druckfeder schließen in diesem Fall einen Winkel miteinander ein.

Die axial verschiebbare und einstellbare Halterung des Halterungsbolzens ist bevorzugt dadurch realisiert, daß der Halterungsbolzen auf der Werkzeugseite des Werkzeugflansches einen mit einer Heberfläche ausgestatteten Einstellkopf aufweist, und daß ein radial bewegbares, mit einer komplementär zu der Heberfläche ausgebildeten Einstellfläche versehenes und mit dem Einstellkopf zusammenwirkendes Einstellelement vorgesehen ist, zur axialen Verschiebung des Halterungsbolzens. Die radiale Anordnung des Einstellelementes ermöglicht eine Einstellbarkeit des Halterungsbolzens bei geringstmöglicher Auswirkung auf die Bautiefe der Überlastsicherung. Auch sind die Einstellelemente sehr leicht von außen zugängig, ohne daß es auch nur der Demontage des Werkzeuges bedürfte, um den Halterungsbolzens einzustellen oder nachzustellen. Bei einer ausgeführten Überlastsicherung sind zwei Einstellelemente vorgesehen, die mit zwei Einstellflächen des Halterungsbolzens zusammenwirken, wobei die Einstellflächen in einem Querhaupt des Halterungsbolzens ausgebildet sind, der damit eine insgesamt T-förmige Gestalt aufweist.

Um ein zuverlässiges Ansprechen der Überlastsicherung auch bei Torsionsbeanspruchungen, d. h. Beanspruchungen, die den Werkzeugflansch relativ zu dem Roboterflansch (nur) zu verdrehen suchen, zu gewährleisten, ist nach einem weiteren Merkmal der Erfindung vorgesehen, daß der Roboterflansch werkzeugflanschseitig mindestens einen Abweisernocken aufweist und daß der Werkzeugflansch roboterflanschseitig eine entsprechende Ausnehmung aufweist. Als besonders vorteilhaft hat sich erwiesen, den Abweisernocken als Abweiserzylinder auszubilden und derart anzuordnen, daß eine Längsachse des Abweiserzylinders auf einen Mittelpunkt des Roboterflansches ausgerichtet ist. Besondere Bedeutung kommt auch der Maßnahme zu, den Abweiserzylinder bezüglich des Durchmessers mit einem leichten Übermaß im Vergleich zu der Ausnehmung vorzusehen, womit sich eine definierte, sichere und gegen einen Verschleißangriff weitgehend unempfindliche Auflagerstellung ergibt.

Eine weitere Maßnahme, die gleichfalls zu einem geringeren Verschleißangriff führt, hat aber auch Vorteile hinsichtlich eines leichten Ansprechens der Überlastsicherung. Gemäß dieser Maßnahme ist vorgesehen, daß der Abweiserzylinder leicht "versenkt" in bspw. dem Roboterflansch angeordnet ist. Mit anderen Worten weist die wirksame Abweiserfläche des Abweiserzylinders eine geringere Umfangserstreckung auf als $\pi$ r entspricht, wobei r der Radius eines Querschnittkreises des Abweiserzylinders ist. Hiermit ist gleichsam eine Keilwirkung der Abweiserzylinder erreicht, was weiter unten noch im einzelnen näher beschrieben ist.

Wenn auch die zuvor geschilderten Vorteile sich bei einem Abweisernocken schon ergeben, ist in praktischer Ausgestaltung doch vorgesehen, daß mehrere Abweisernocken bzw. Abweiserzylinder ausgebildet sind, und daß die Abweisernocken bzw. Abweiserzylinder unsymmetrisch verteilt angeordnet sind. Bei symmetrischer Verteilung könnte bei Verdrehen des Werkzeugflansches relativ zu dem Roboterflansch der Roboterflansch wieder in seine Ausgangsstellung "einschnappen", was je nach Werkzeug etwa schon nicht erwünscht ist.

Die Abweisernocken können grundsätzlich sowohl in dem Roboterflansch wie auch in dem Werkzeugflansch vorgesehen sein, und die entsprechenden Ausnehmungen in dem jeweils anderen Flansch. Bevorzugt ist jedoch vorgesehen, daß die Abweiserzylinder in dem Roboterflansch angeordnet sind und dementsprechend die zugehörigen Ausnehmungen in den Werkzeugflansch eingearbeitet sind. Dies empfiehlt sich schon aus der Tatsache, daß jedenfalls der Werkzeugflansch relativ zu dem Roboterflansch bewegbar ist.

Die beschriebene Ausgestaltung der Anweisernocken ist auch
noch in fertigungstechnischer Hinsicht vorteilhaft. Sowohl
im Werkzeugflansch wie im Roboterflansch ist eine Ausnehmung einzuarbeiten, in der ein Abweiserzylinder einerseits gehaltert ist, andererseits sich bei Normallage der
Flansche zueinander einfügt. Diese zylinderförmige Ausnehmung kann bei gemeinsamer Einspannung der Flansche bspw.
durch Bohren herausgearbeitet werden, womit ohne weiteres
sichergestellt ist, daß die notwendigen Ausnehmungen sich
in dem Werkzeugflansch und dem Roboterflansch an winkelmäßig exakt übereinstimmenden Stellen befinden.

Hinsichtlich der eingangs beschriebenen erfindungsgemäßen
Lehre, den Roboterflansch und den Werkzeugflansch in
einem Dichtungsbereich abdichtend zusammenwirkend auszubilden, geht eine besondere Ausgestaltung dahin, daß die
Abdichtung des Dichtungsbereiches durch in den Werkzeugflansch eingelassene Dichtlippen erfolgt, wenn auch hierbei prinzipiell eine Umkehrung möglich ist, daß nämlich
die Dichtlippen in den Roboterflansch eingelassen sind.
Gehaltert werden die Dichtlippen in dem Werkzeugflansch
in Nuten, die im Querschnitt zur Oberfläche des Werkzeugflansches hin sich verjüngend ausgebildet sind. Bspw. kann
dies durch eine einerseits gerade  andererseits hinterschnittene Flanke der Nut realisiert sein. Damit sind
die Dichtlippen effektiv und auf einfache Weise gehaltert.

Roboterseitig besteht der Dichtungsbereich aus einer
Nut, in der Druckmedium geführt ist, wobei diese Nut im
Dichtungszustand dann durch zwei also jeweils beidseitig
verlaufende Dichtungslippen abgedichtet ist. Das Druckmedium wird von einer Druckmediumleitung in dem Industrieroboter abgenommen, die normalerweise mit realtiv hohem
Druck beaufschlagt ist. Da jedoch die Höhe des Druckes des
Druckmediums in dem Dichtungsbereich für die Funktion

der Überlastsicherung praktisch keine Bedeutung hat, ist gemäß einer weiteren bevorzugten Ausgestaltung vorgesehen, daß die Zuleitung zu dem Dichtungsbereich eine Drosseleinrichtung aufweist und daß der Sicherheitsabschalter in Strömungsrichtung des Druckmediums hinter der Drosseleinrichtung angeordnet ist und mit der Zuleitung in Wirkverbindung steht. Damit ist der Sicherheitsabschalter nur mit einem geringen Druck beaufschlagt, erfordert also keinen besonderen baulichen Aufwand.

Im folgenden ist die Erfindung noch anhand einer lediglich ein Ausführungsbeispiel darstellenden Zeichnung näher erläutert, auf der zeigt:

Fig. 1 einen Querschnitt durch eine erfindungsgemäße Überlastsicherung;

Fig. 2 eine Draufsicht auf den Gegenstand gemäß Fig. 1;

Fig. 3 eine Prinzipskizze eines Druckmediumschaltplanes und

Fig. 4 eine Schnittdarstellung des Gegenstandes gemäß Fig. 1, geschnitten entlang der Linie IV-IV.

Dargestellt und beschrieben ist eine Überlastsicherung, die insbesondere für eine Anwendung bei einem Industrieroboter vorgesehen ist. Die Überlastsicherung besteht im wesentlichen aus einem Roboterflansch 1 und einem Werkzeugflansch 2, die in einem mit einem Druckmedium beaufschlagten Dichtungsbereich 3 abdichtend zusammenwirken. Eine Sicherheitsabschaltung ist durch einen Durckabfall in dem Druckmedium auslösbar.

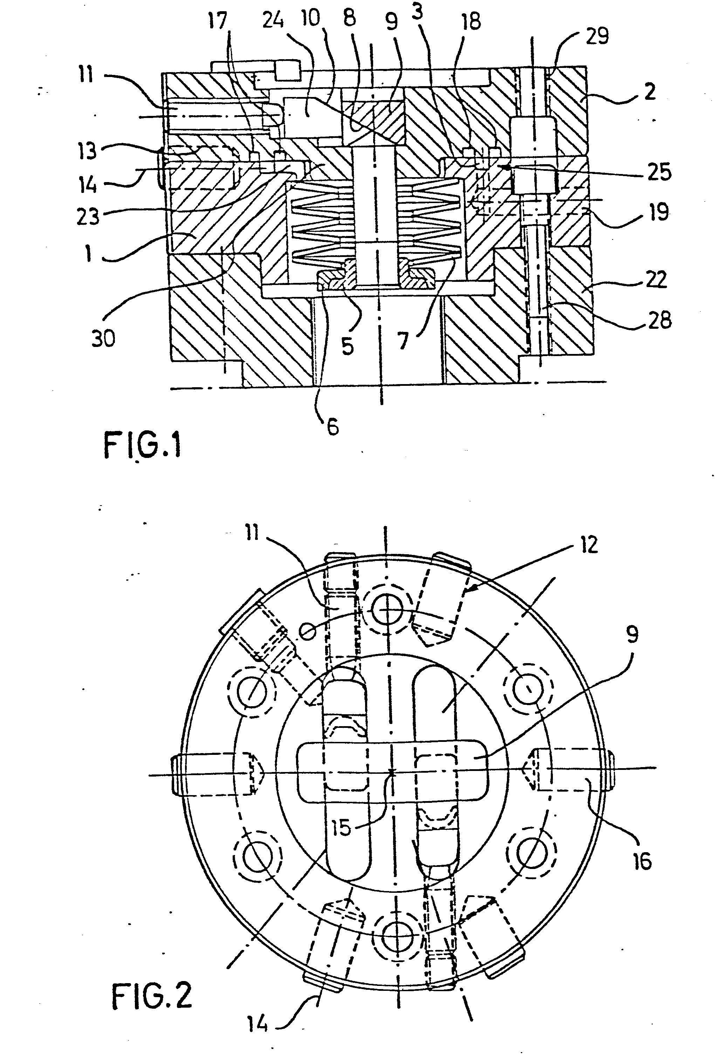

Eine derartige Überlastsicherung wird bei einem Industrieroboter zwischen einen Roboterarm und ein Werkzeug gesetzt, um eine Abschaltung des Industrieroboters bei unzulässig hohen Gewichten oder Beanspruchungen auszulösen. Bei der in Fig. 1 dargestellten Überlastsicherung ist ein Anschlußflansch 22 des Roboterarms zu erkennen, während das Werkzeug nicht dargestellt ist.

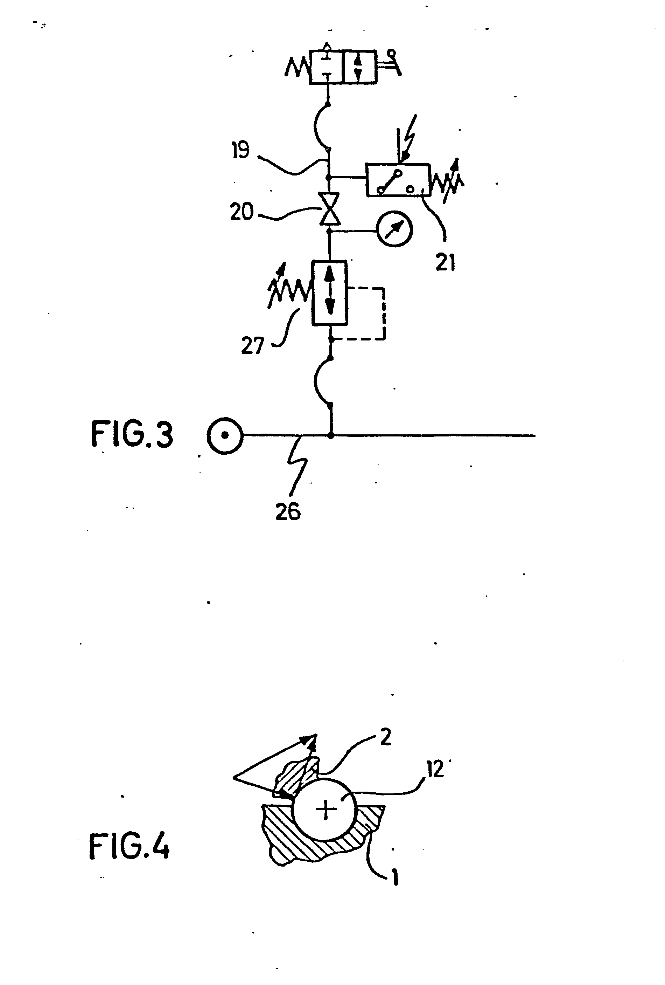

Der Werkzeugflansch 2, an dem das Werkzeug im Betriebszustand angeflanscht ist, ist relativ zu dem Roboterflansch 1 bewegbar, nämlich über die Verspannung des Werkzeugflansches 2 mittels einer Druckfeder 7 gegen den Roboterflansch 1. Bei einer unzulässig hohen, d. h. die Vorspannkraft in der Druckfeder 7 übersteigenden Last hebt der Werkzeugflansch 2 von dem Roboterflansch 1 ab und in dem Dichtungsbereich 3 kommt es zu einem Druckabfall, worauf ein Sicherheitsabschalter 21 (vergl. Fig. 3) anspricht.

Wie im einzelnen in Fig. 1 zu erkennen ist, stützt sich die Druckfeder 7 einerseits auf einem Bolzenauflagerflansch 5 eines Halterungsbolzens 4 ab, der in dem Werkzeugflansch 2 axial bewegbar geführt ist, und andererseits auf einem Auflagerflansch 23 des Roboterflansches 1. Die axiale Stellung des Halterungsbolzens 4 kann mit Hilfe eines Einstellelementes 11 verändert werden, das radial zu dem Halterungsbolzen 4 angeordnet ist. Das Einstellelement 11 ist mit einem Außengewinde und die Bohrung in dem Werkzeuflansch 2, die das Einstellelement aufnimmt, mit einem entsprechenden Innengewinde versehen. Die Einstellung ist somit durch einfaches schraubenartiges Verdrehen des Einstellelementes 11 durchführbar. Bei der in Fig. 1 dargestellten Ausführung ist ein von dem Einstellelement 11 getrennter Heberflächenkopf 24 vorgesehen, der lediglich radial verschiebbar ist, während das Einstellelement 11 auch aufgrund der beschriebenen Gewindeführung drehbar ist. Grundsätzlich könnte das
Einstellelement 11 auch einstückig ausgeführt sein, indem
etwa der mit dem Einstellkopf 9 des Halterungsbolzens 4
zusammenwirkende Kopf kegelartig ausgebildet ist.
Der besondere Vorteil der radialen angeordneten Einstellelemente 11 ist darin zu sehen, daß auch eine
Nachstellung bzw. Anpassung an veränderte Verhältnisse
der Druckfeder 7 bei aufgesetztem Werkzeug vorgenommen werden kann.

Der Einstellkopf 9 des Halterungsbolzens 4 weist Heberflächen 8 auf, die mit dem Heberflächenkopf 24 zusammenwirken, an dem Einstellflächen 10 vorgesehen sind. Erkennbar ist, daß sowohl die Heberflächen 8 wie auch die
Einstellflächen 10 schräg zur Achse des Halterungsbolzens
4 verlaufen. Wie insbesondere Fig. 2 zu entnehmen ist,
weist der Halterungskopf 9 zwei mit Abstand zueinander
ausgebildete Heberflächen 8 auf, die in dem insgesamt
T-förmigen Einstellkopf 9 jeweils seitlich von dem Schaft
des Halterungsbolzens 4 sich befinden. Entsprechend
wirken diese beiden Heberflächen 8 jeweils mit einem
Einstellelement 11 bzw. einem Heberflächenkopf 24
zusammen.

Wie eine nähere Betrachtung der Fig. 1 hinsichtlich des
Bolzenauflagerflansches 5 ergibt, liegt die Druckfeder 7
nur mittelbar auf dem Bolzenauflagerflansch 5 auf. Unmittelbar stützt sie sich auf einem Auflagerring 6 ab,
der in seinem mit dem Bolzenauflagerflansch 5 zusammenwirkenden Bereich diesem entsprechend kugelkalottenartig
ausgebildet ist. Der Bolzenauflagerflansch 5 und der
Auflagerring 6 wirken so kugelgelenkartig zusammen, womit ein Auseinanderlaufen der Achsen des Halterungsbolzens
4 und der Druckfeder 7 möglich ist.

Um ein Abheben des Werkzeugflansches 2 von dem Roboterflansch 1 auch bei einer (lediglich) Torsionsbelastung
des Werkzeuges des Industrieroboters zu bewirken, sind
in dem Roboterflansch 1 befestigte Abweiserzylinder 12
vorgesehen, auf denen der Werkzeugflansch 2 ruht. In dem
Werkzeugflansch 2 sind entsprechend den Abweiserzylindern
12 Ausnehmungen 13 vorgesehen.

Wie Fig. 2 zu entnehmen ist, sind insgesamt bei dem Ausführungsbeispiel fünf Abweiserzylinder 12 vorgesehen, die
unsymmetrisch verteilt angeordnet, jedoch mit ihrem
Längsachsen 14 jeweils auf den Mittelpunkt 15 des Roboterflansches 1 ausgerichtet sind. Grundsätzlich ist der erfindungsgemäße Erfolg natürlich auch mit weniger Abweiserzylindern erreichbar. Prinzipiell ist etwa schon bei drei
Abweiserzylindern 12 die Wirkung erreicht, daß der Werkzeugflansch 2 zentriert auf dem Roboterflansch 1 aufliegt.
Bei einer geringeren Anzahl von Abweiserzylindern 12
ist ansonsten noch eine gesonderte Zentrierungsmaßnahme
notwendig, etwa indem der Sitz 30 des Werkzeugflansches
2 in dem Roboterflansch 1 abgerundet ausgebildet ist, wo
hingegen bei dem Ausführungsbeispiel, wie Fig. 1 zu entnehmen, der Werkzeugflansch 2 mit dem Roboterflansch 1
in dem Bereich des Sitzes 30 nicht in Berührung ist.

Als weitere Besonderheit ist in Fig. 1 und insbesondere in
Fig. 4 die Abweiserzylinder 12 in den Roboterflansch 1 tiefer
eingelassen sind, als es einer "symmetrischen" Halterung
entsprechen würde, wenn auch diese "Unsymmtrie" in den Fig. 1 u. 4
übertrieben zur Kenntlichmachung dargestellt ist. Ausreichend ist eine lediglich geringfügige tiefere Einlassung.

Besondere Bedeutung hat diese unsymmetrische Halterung der Abweiserzylinder 12 für ein einwandfreies Abheben des Werkzeugflansches 2 insbesondere bei Torsionsbeanspruchung. Dies soll das in Fig. 4 eingezeichnete Kräftedreieck verdeutlichen, das zeigt, daß die resultierende Kraft den Werkzeugflansch 2 unmittelbar abzuheben sucht. Die Einzeichnung des Kräftedreiecks unmittelbar oberhalb des Spaltes zwischen dem Werkzeugflansch 2 und dem Roboterflansch 1 soll nicht bedeuten, daß der Werkzeugflansch 2 lediglich in diesem Bereich auf einem Abweiserzylinder 12 aufliegt. Vielmehr liegt der Werkzeugflansch 2 trotz der weiter unten noch beschriebenen Maßnahme "größere Druchmesser" größtenteils unmittelbar auf einem Abweinserzylinder 12 auf. Insgesamt ergibt sich durch die beschriebene unsymmetrische Halterung gleichsam eine Keilwirkung der Abweiserzylinder 12.

Die Abweiserzylinder 12 sind in dem Roboterflansch 11 bspw. über eine Schraubverbindung gehaltert, was jedoch nicht dargestellt ist.

Bei der beschriebenen tieferen Halterung der Abweiserzylinder 12 in dem Werkzeugflansch 1 würde zunächst die wirksame Abweiserfläche 16 der Abweiserzylinder 12 mit der entsprechenden Ausnehmung 13 in dem Werkzeugflansch 2 in Normalstellung des Werkzeugflansches 2 nicht mehr oder nur noch einseitig in Berührung stehen. Weiterhin ist daher vorgesehen, daß die Abweiserzylinder 12 mit einem etwas größeren Durchmesser als die Ausnehmungen 13 bzw. die entsprechenden Ausnehmungen in dem Roboterflansch 1 gewählt sind.

Von Bedeutung ist auch, daß die Abweiserzylinder 12, wie in Fig. 2 zu erkennen, unsymmetrisch verteilt angeordnet sind, was zu dem schon weiter vorne beschriebenen Vorteil führt.

Der Dichtungsbereich 3 ist im einzelnen aus Dichtlippen
17 gebildet, die in Nuten 18 gehaltert sind und einer
Druckmediumnut 25, wie in Fig. 1 zu erkennen bei dichtendem
Aneinanderliegen von Werkzeugflansch 2 und Roboterflansch
1 beidseitig von Dichtungslippen 17 abgeschlossen ist.
Besonders vorteilhaft ist die Ausgestaltung der Nuten 18,
die im Querschnitt zur Oberfläche des Werkzeugflansches 12
hin sich verjüngend ausgebildet sind. Wie in Fig. 1 auch
zu erkennen, ist hierzu einseitig die Nut 18 hinterschnitten ausgebildet.

Ein besonderer Vorteil der erfindungsgemäßen Überlastsicherung ist noch, daß der Roboterflansch 1 nur sehr
geringen mechanischen Beanspruchungen ausgesetzt ist, insbesondere aufgrund der vorgesehenen Abweiserzylinder 12,
die als gesonderte Teile in den Roboterflansch 1 eingesetzt
werden. Dies ermöglicht es, den Roboterflansch 1 werkstoffmäßig relativ frei zu gestalten, was bspw. die Wahl
eines Leichtwerkstoffes, insbesondere eines Leichtmetalles wie etwa Aluminium ermöglicht, wodurch nochmals
eine erhebliche Gewichtseinsparung zu erzielen ist.

In Fig. 3 schließlich ist ein Schaltbild für das Druckmedium dargestellt, wobei zunächst der Dichtungsbereich 3
symbolisiert ist, nämlich bei dem dargestellten Zustand
im Dichtzustand. Wesentlich ist, daß das Druckmedium von
einer Druckmediumleitung 26 in dem Industrieroboter abgenommen wird und daß zwischen der Druckmediumleitung 26
und der Zuleitung 19 ein Druckregelventil 27, das den Druck
auslaufseitig konstant hält, und eine Drosseleinrichtung 20
geschaltet ist, wodurch in der Zuleitung 19 ein relativ
geringer Druck einstellbar ist. Hiermit ist auch der Vorteil verbunden, daß bei Auslösung der Sicherheitsabschaltung nicht unverhältnismäßig viel Druckmedium aus

der Überlastsicherung austritt. Der Sicherheitsabschalter 21 ist, wie in Fig. 3 zu erkennen, an die Zuleitung 19 angeschaltet, also gleichfalls mit relativ geringem Druck beaufschlagt.

Die Drossel 20 wird bevorzugt so ausgelegt, daß sie im stationären Zustand nur eine Druckmediummenge durchläßt, die nur wenig größer ist als diejenige Menge, die im stationären Zustand in dem Dichtungsbereich austritt. So kann ein geringstmögliches Entweichen von Druckmedium im Schaltzustand sichergestellt werden. Gleichzeitig erreicht man durch diese Maßnahme aber auch eine erhebliche "Feinfühligkeit" der Überlastsicherung. Schon bei geringfügig höherem Austritt von Druckmedium in dem Dichtungsbereich als einem normalen Leckverlust entspricht, spricht die Überlastsicherung an.

Von besonderer Bedeutung im Rahmen der Erfindung ist noch die besondere Ausgestaltung des Werkzeugflansches 2 und des Roboterflansches 1 im Bereich der Befestigungsschrauben. Wie insbesondere Fig. 1 der Zeichnung entnommen werden kann, sind Befestigungsschrauben 28 vorgesehen, mit denen der Roboterflansch 1 auf dem Anschlußflansch 22 befestigbar ist. Ebenso ist ein - in der Zeichnung nicht dargestelltes - Werkzeug des Industrieroboters an dem Werkzeugflansch 2 anschraubbar. Die hierzu notwendigen, mit einem Gewinde versehenen Bohrungen 29 sind koaxial zu den Gewindebohrungen für die Befestigungsschrauben 28 vorgesehen. Soweit ein Werkzeug noch nicht an den Werkzeugflansch 2 der Überlastsicherung angeschraubt ist, wie bspw. in Fig. 1 dargestellt, können die Befestigungsschrauben 28 durch die Bohrungen 29 angezogen oder gelöst werden.

Die in der vorstehenden Beschreibung, der Zeichnung und
den Ansprüchen offenbarten Merkmale der Erfindung können
sowohl einzeln als auch in beliebiger Kombination für
die Ausgestaltung der Erfindung in ihren verschiedenen
Erscheinungsformen von Bedeutung sein.

0162220

Ansprüche
==================

1. Überlastsicherung, insbesondere für einen einen Roboterarm und ein Roboterwerkzeug aufweisenden Industrieroboter, vorzugsweise anordbar zwischen dem Roboterarm und dem Roboterwerkzeug, mit einem Roboterflansch und einem Werkzeugflansch, wobei der Werkzeugflansch relativ zu dem Roboterflansch bewegbar ist, dadurch gekennzeichnet, daß der Roboterflansch (1) und der Werkzeugflansch (2) in einem mit einem Druckmedium beaufschlagbaren Dichtungsbereich (3) abdichtend zusammenwirken und daß eine Sicherheitsabschaltung durch einen Druckabfall in dem Druckmedium auslösbar ist.

2. Überlastsicherung, insbesondere nach Anspruch 1, wobei der Werkzeugflansch an dem Roboterflansch über eine Druckfeder gehaltert ist, die sich einerseits auf einem Bolzenauflagerflansch eines Halterungsbolzens und andererseits auf einem Auflagerflansch des Roboterflansches abstützt, dadurch gekennzeichnet, daß der Halterungsbolzen (4) in dem Werkzeugflansch (2) axial verschiebbar und nach Maßgabe einer zu wählenden Vorspannkraft einstellbar gehaltert ist.

3. Überlastsicherung nach Anspruch 2, dadurch gekennzeichnet, daß der Bolzenauflagerflansch (5) in seinem Auflagerbereich kugelkalottenartig ausgebildet ist und mit einem entsprechend ausgebildeten Auflagerring (6) zusammenwirkt, auf den die Druckfeder (7) aufliegt.

4. Überlastsicherung nach Anspruch 2 oder 3, dadurch gekennzeichnet, daß der Halterungsbolzen (4) auf der Werkzeugseite des Werkzeugflansches (2) einen mit einer Heberfläche (8) ausgestatteten Einstellkopf (9) aufweist, und daß ein radial bewegbares, mit einer komplementär zu der Heberfläche (8) ausgebildeten Einstellfläche (10) versehenes und mit dem Einstellkopf (9) zusammenwirkendes Einstellelement (11) vorgesehen ist, zur axialen Verschiebung des Halterungsbolzens (4).

5. Überlastsicherung nach einem der Ansprüche 1 bis 4, dadurch gekennzeichnet, daß der Roboterflansch (1) werkzeugflanschseitig mindestens einen Abweisernocken (12) aufweist und daß der Werkzeugflansch (2) roboterflanschseitig eine entsprechende Ausnehmung (13) aufweist.

6. Überlastsicherung nach Anspruch 5, dadurch gekennzeichnet, daß als Abweisernocken (12) ein Abweiserzylinder (12) vorgesehen ist, und daß der Abweiserzylinder (12) mit seiner Längsachse (14) auf einen Mittelpunkt (15) des Roboterflansches (1) ausgerichtet ist.

7. Überlastsicherung nach Anspruch 6, dadurch gekennzeichnet, daß eine wirksame Abweiserfläche (16) des Abweiserzylinders (12) eine geringere Umfangserstreckung als $\pi r$ aufweist, wobei r der Radius eines Querschnittkreises des Abweiserzylinders (12).

8. Überlastsicherung nach einem der Ansprüche 6 oder 7, dadurch gekennzeichnet, daß der Abweiserzylinder (12)
einen geringfügig größeren Durchmesser aufweist als
die zugeordnete zylinderförmige Ausnehmung (13) des
Werkzeugflansches (2).

9. Überlastsicherung nach einem der Ansprüche 5 bis 8,
dadurch gekennzeichnet, daß mehrere Abweisernocken (12)
bzw. Abweiserzylinder (12) vorgesehen sind, und daß die
Abweisernocken (12) bzw. Abweiserzylinder (12) unsymmetrisch verteilt angeordnet sind.

10. Überlastsicherung nach einem der Ansprüche 1 bis 9,
dadurch gekennzeichnet, daß die Abdichtung des Dichtungsbereiches (3) durch in den Werkzeugflansch (2) eingelassene Dichtlippen (17) erfolgt.

11. Überlastsicherung nach Anspruch 10, dadurch gekennzeichnet, daß der Werkzeugflansch (2) Nuten (18) zur
Halterung der Dichtlippen (17) aufweist  und daß die Nuten
(18) im Querschnitt zur Oberlfäche des Werkzeugflansches
(2) sich verjüngend ausgebildet sind.

12. Überlastsicherung nach einem der Ansprüche 1 bis 11,
wobei der Industrieroboter eine Druckmediumleitung mit ggf.
reltiv hohem Druck aufweist, dadurch gekennzeichnet, daß
eine Zuleitung (19) zu dem Dichtungsbereich (3) eine
Drosseleinrichtung (20) aufweist und daß ein Sicherheitsabschalter (21) in Strömungsrichtung des Druckmediums
hinter der Drosseleinrichtung (20) angeordnet ist und mit
der Zuleitung (19) in Wirkverbindung steht.

FIG.1

FIG.2

0162220

19

20

21

27

**FIG.3**

26

2

12

**FIG.4**

1

**Europäisches Patentamt**

**EUROPÄISCHER RECHERCHENBERICHT**

**0162220**
Nummer der Anmeldung

EP 85 10 3079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 025 952 (DAIMLER-BENZ AG) <br> * Seite 4, Zeile 9 - Seite 5, Zeile 9 * | 1,10, 12 | B 25 J 19/06 |
| Y | | 2,5,6 | |
| | --- | | |
| P,X | DE-A-3 310 069 (MANTEC GESELLSCHAFT FÜR AUTOMATISIERUNGS- UND HANDHABUNGSSYSTEME mbH) <br> * Seite 3, Zeile 25 - Seite 4, Zeile 5 und Zeilen 15-31 * | 1,10, 12 | |
| | --- | | |
| P,Y | DE-A-3 241 132 (HARMS) <br> * Seite 3, Zeile 17 - Seite 4, Zeile 6 und Zeilen 16-19 * | 2 | RECHERCHIERTE SACHGEBIETE (Int. Cl.4) |
| A | | 4 | B 25 J |
| | --- | | |
| Y | DE-A-2 749 603 (INDUSTRIE-WERKE KARLSRUHE-AUGSBURG) <br> * Seite 6, Zeilen 5-27 * | 5,6 | |
| | --- | | |
| P,A | GB-A-2 127 775 (THE GENERAL ELECTRIC CO.) | | |
| A | DE-A-2 717 871 (VOLKSWAGENWERK AG) | | |
| | ----- | | |

Der vorliegende Recherchenbericht wurde für alle Patentansprüche erstellt.

| Recherchenort <br> DEN HAAG | Abschlußdatum der Recherche <br> 11-07-1985 | Prüfer <br> LAMMINEUR P.C.G. |
|---|---|---|